# EUROPEAN PATENT SPECIFICATION

(11) **EP 2 199 488 B1**
(45) Date of publication and mention of the grant of the patent: **02.07.2014**
(21) Application number: 09177600.5
(22) Date of filing: 01.12.2009
(51) Int. Cl.: E04F 13/08, A47B 95/00, F16B 5/00

(54) **Vertical regulation device for the wall assembly of lining panels**
Vorrichtung zur vertikalen Regulierung für die Wandmontage von Verkleidungsplatten
Dispositif de régulation verticale pour ensemble de paroi de panneaux de revêtement

(30) Priority: 12.12.2008 IT MI20082204
(43) Date of publication of application: 23.06.2010
(73) Proprietor: LEONARDO S.r.l., 22060 Figino Serenza, CO (IT)
(72) Inventor: Cattaneo, Carlo, 22060, FIGINO SERENZA (IT)
(74) Representative: Martegani, Franco

(56) References cited:
- EP-A2- 0 389 054
- EP-A2- 0 707 815
- WO-A2-2008/088296
- DE-A1-102005 010 280
- DE-C1- 3 809 728
- US-A- 2 917 966

## Description

The present invention relates to a perfected vertical regulation device for the wall assembly of lining panels.

The invention also relates to a lining panel equipped with a series of regulation devices obtained according to the invention.

As is well-known to experts in the field, for the wall assembly of lining panels, for example for the production of "boiseries", or other types of linings, environments and/or various kinds of walls, devices are preferably used, which allow both the wall anchorage of each panel and its vertical regulation.

The wall anchorage of lining panels of the above type comprises the defining of an interspace, which should be as narrow as possible. For this purpose, the height regulation devices of the known type, which are relatively cumbersome (in thickness) require the production of appropriate seats in the panel, consequently costly additional processings.

One known vertical regulation device is shown in EP 389 054 in the name of CAMAR SPA.

This device is provided by a slide which carries anchoring means to a section on a wall, said slide being movably engaged with a screw.

Although useful, this device shows the drawback of having a quite complex structure.

The general objective of the present invention is to provide a regulation device structured so as to be able to be fixed directly to the lining panel, without requiring additional processings of the same, at the same time creating a narrow interspace between panel and wall.

The above objective is achieved by a regulation device having the characteristics specified in the main claim and enclosed subclaims.

The structural and functional characteristics of the present invention and its advantages with respect to the known art will appear more evident from the following description, referring to the enclosed drawings, which show a supporting column for superelevated modulated floors produced according to the innovative principles of the invention.

In the drawings:
- figure 1 is an exploded perspective view illustrating a possible embodiment of the regulation device according to the invention;

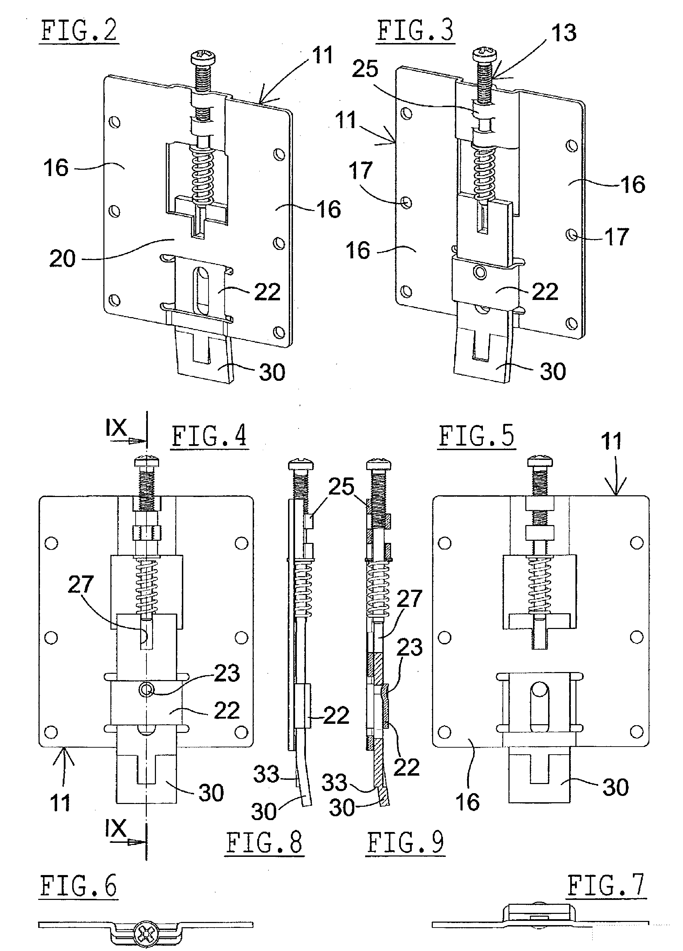

- figures 2, 3 are two perspective views respectively illustrating the device of figure 1, from opposite sides, but in an assembled condition;
- figures 4 and 5 are two raised views respectively illustrating the opposite sides of the devices of figures 2, 3;
- figures 6, 7 are two plan views from above and below respectively, of the device of figures 4, 5;
- figure 8 is a raised side view of the device of figures 2, 3;
- figure 9 is a sectional view taken according to the track IX-IX of figure 4;
- figure 10 is a perspective view illustrating a panel assembled on a wall using a regulation device (a series of) of figures 1-9, only in correspondence with the upper edge of the same panel; and
- figure 11 is a view similar to figure 10, but illustrating a panel assembled to a wall using pairs (a series of pairs) of devices of figures 1-9 in correspondence with both the upper edge and the lower edge of the same panel.

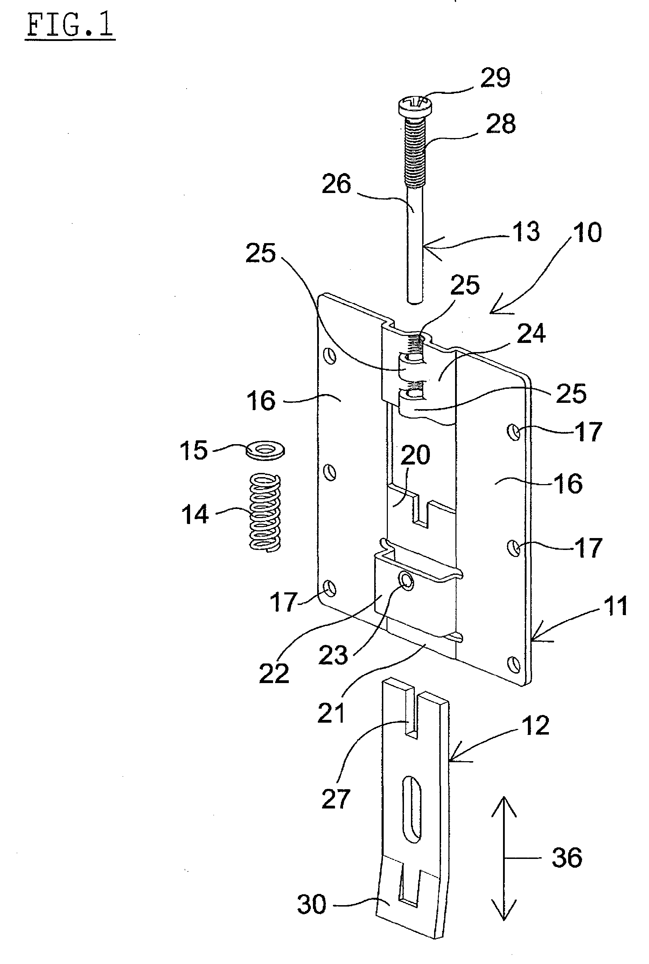

With reference first of all to figure 1 of the drawings, a vertical regulation device, for the wall assembly of lining panels, is indicated as a whole with 10 and comprises a regulation mechanism which is structurally composed of five components: a plate 11, a cursor or slide 12, a regulation screw 13, a contrast spring 14, and a washer 15.

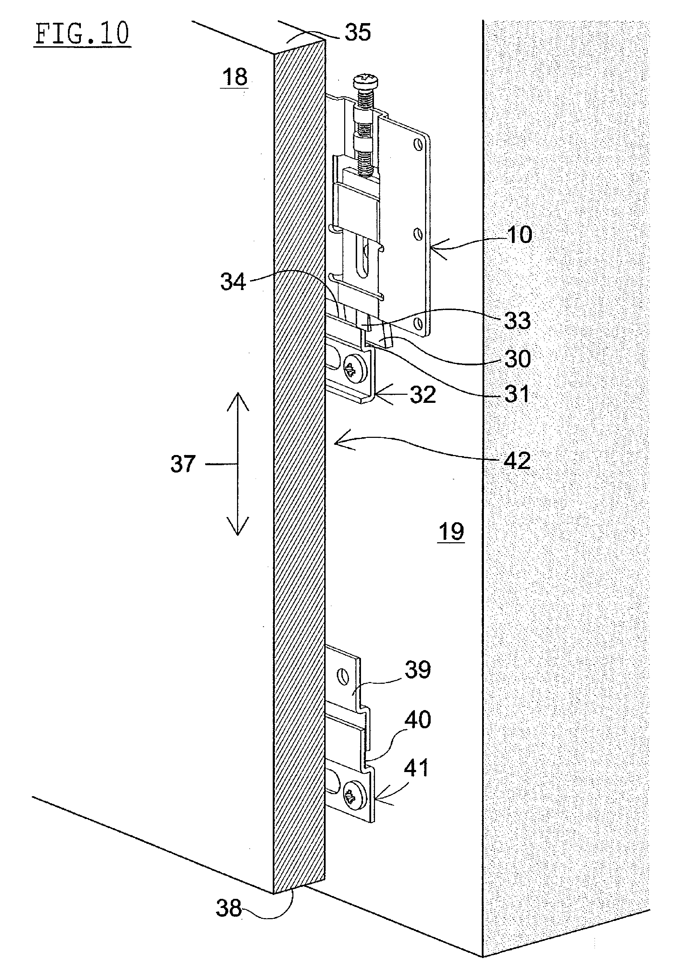

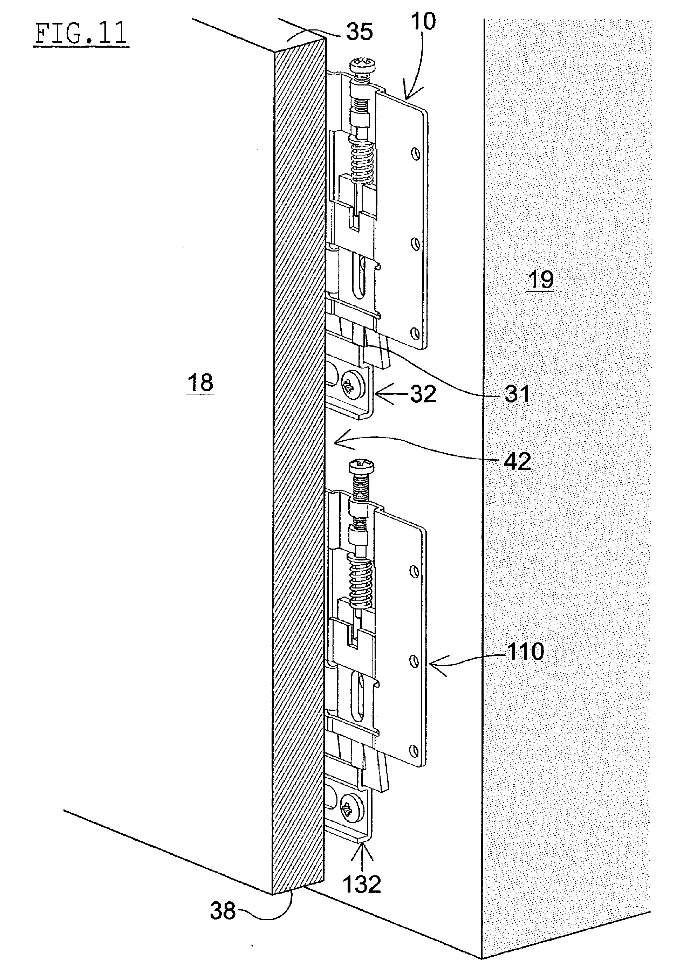

The plate 11, for example made of metal and rectangular, comprises two side flanges 16 with holes 17 for the passage of screws (not shown), which serve to fix the device 10 to a panel 18 which is to be assembled - stably and in a correct position - onto a wall 19 (figures 10, 11) as explained hereunder.

The panel 18 and the wall 19 can be of any material and type.

Between the above side flanges 16, there are constraint and translation seats of the slide 12, and of the regulation screw 13.

More specifically, the constraint and translation seat of the slide 12 is defined by two sections or rest and sliding surfaces 20, 21, interspaced, between which there is a U-bolt 22 with a retention ashlar 23 (against the free slipping off) of the slide 12.

The sections 20, 21 are coplanar to the flanges 16, whereas the U-bolt 22 protrudes only as much as to allow the passage and correct sliding of the slide 12.

The constraint and translation seat of the screw 13 comprises a shaped section 24 with threaded arched portions 25, counteropposed and reciprocally offset, which define an axial passage for the screw 13. For this purpose, the stem of the screw 13 has a non-threaded section 26 which, at the tip, is freely inserted into an end, milled in 27, of the slide 12, and a threaded section 28 with a maneuvering head 29.

The slide 12, at the opposite end to the milling 27, ends with a protruding tooth 30 destined for being anchored inside a canaliform seat 31 of a supporting section 32 (of the known type) fixed to the wall 19.

A stop 33 collaborates with said tooth 30, which is buffered against the free edge 34 of said seat 31, when the tooth 30 itself is inserted in the above-mentioned canaliform section (figure 10, 11).

As can be clearly seen in the drawings, the contrast spring 14 acts between the end of the slide 12, opposite the tooth 30, and the section 24, in order to favour and ensure the engagement of the tooth 30 inside the canaliform seat 31 of the section 32.

For experts in the field, the functioning of the regulation device according to the invention is evident from the above description, with reference to the figures, and is briefly the following.

With reference to figure 10, a panel 18 can be assembled onto a wall 19 by means of a series of devices 10 according to the invention (only one is shown), which are fixed behind the panel 18 itself close to the upper edge 35. The fixing of the device 10 is effected without any necessity of particular processing (suitable seats) on the panel 18.

The panel 18 can thus be hooked to the section 32 by inserting the tooth 30 of the devices 10 into the seat 31 and buffering the stops 33 against the edge 34.

Once this anchoring operation of the panel 18 to the wall has been effected, its position in height can be finely regulated by acting - with a screwdriver - on the screws 13, whose screwing or unscrewing causes the slide 12 to run in the directions of the arrow 36 and consequently a vertical translation of the panel 18 in the directions of the arrow 37, due to the contrast action of the same slide 12 between the section 32 integral with the wall 19 and the plate 14 integral with the panel 18. The weight of the panel 18 ensures the engagement of the tip of the regulation screw 13 inside the milling 27 of the slide 12.

In order to maintain a substantial parallelism (verticality) of the panel 18 with respect to the wall 19, in correspondence with the lower edge 38, a series of spacers 39 (only one is shown) are fixed to the same panel 18 and inserted inside a canaliform seat 40 of a section 41 fixed to the wall 19.

Figure 11 illustrates a preferred application of the regulation device according to the invention wherein two series of identical devices 10, 110 are envisaged, respectively in correspondence with the upper edge 35, and the lower edge 38 of the panel 18.

In conformance with this mode of use of the invention, the panel 18 is first hooked to the wall 19 by means of the lower devices 110 (for example all pre-regulated in the same way) and then constrained by means of the upper devices 10.

Once this operation has been effected, the position in height of the panel can be regulated by acting only on the regulation screws 13 of the upper devices 10, as the lower devices 110 are obviously inaccessible.

The objective of the invention of providing a height regulation device which can be fixed behind the panel without the necessity of having particular seats thereon, at the same time creating a very narrow interspace 42, has therefore been achieved.

The protection scope of the invention is defined by the enclosed claims.

## Claims

1. A vertical regulation device (10) for the wall assembly (19) of a lining panel (18) of the type comprising a regulation mechanism (12, 13) held by a supporting plate (11) destined for being fixed to said lining panel (18), and wherein said regulation mechanism (12, 13) comprises:
- anchoring means (30) to a section (32) fixed to
said wall (19),
- a slide (12), the lower end of which has said anchoring means (30) to said section (32).
- a regulation screw (13) acting at the upper end of said slide (12),
said plate (11) comprising two side flanges (16) for fixing the device (10) to said panel (18), between said flanges (16), there being constraint seats (22, 23) and translation seats (20, 21) of said slide (12) and constraint and translation seats (24, 25) of said screw (13),
**characterized in that**
said constraint and translation seats (24, 25) of said screw (13) comprise a shaped portion (24) with threaded arched portions (25), which define an axial passage for said screw (13), a stem of said regulation screw (13) having a non-threaded section (26) which, at the tip, is freely inserted into an end, milled in (27) of said slide (12), and a threaded section (28) with a maneuvering head (29) which is coupled with said threaded portions (25).

2. The device (10) according to claim 1, **characterized in that** said anchoring means (30) consist of a protruding tooth suitable for being inserted inside a canaliform seat (31) of the section (32) and a stop (33) which is buffered against a free edge (34) of said seat (31).

3. The device (10) according to claim 1, **characterized in that** said constraint seats (22, 23) consist of a U-bolt (22) with a retention ashlar (23) of said slide (12), said translation seats (20, 21) consist of two sections or rest and sliding planes, interspaced and coplanar to the plate (16), between which planes, there is said U-bolt (22) which protrudes from the plate (16) only as much as to allow the passage and correct sliding of the slide (12).

4. The device (10) according to claim 1, **characterized in that** said shaped portion (24) is provided with threaded arched portions (25), counteropposed and reciprocally offset, which define an axial passage for said screw (13).

5. The device (10) according to claim 1, **characterized in that** a contrast spring (14) acts between said slide (12) and said supporting plate (11).

6. The device (10) according to claim 1, **characterized in that** a contrast spring (14) acts between said portion (24) and said end milled in (27) of said slide (12).

7. A lining panel (18) comprising a series of devices (10) according to one or more of the claims from 1 to 6.

## Patentansprüche

1. Vertikale Regulierungsvorrichtung (10) für die Wandmontage (19) eines Verkleidungspaneels (18) von dem Typ, der einen Regulierungsmechanismus (12, 13) umfasst, der durch eine Tragplatte (11) gehalten ist, die zur Befestigung an dem Verkleidungspaneel (18) bestimmt ist, und wobei der Regulierungsmechanismus (12, 13) umfasst:
- Verankerungsmittel (30) an einem Teilstück (32), das an der Wand (19) befestigt ist,
- einen Schlitten (12), dessen unteres Ende die Verankerungsmittel (30) an dem Teilstück (32) aufweist,
- eine Regulierungsschraube (13), die an dem oberen Ende des Schlittens (12) wirkt,
wobei die Platte (11) zwei Seitenflansche (16) zur Befestigung der Vorrichtung (10) an dem Paneel (18) umfasst, wobei zwischen den Flanschen (16) Zwangssitze (22, 23) und Translationssitze (20, 21) des Schlittens (12) und Zwangs- und Translationssitze (24, 25) der Schraube (13) vorhanden sind, **dadurch gekennzeichnet, dass**
die Zwangs- und Translationssitze (24, 25) der Schraube (13) einen geformten Abschnitt (24) mit mit Gewinde versehenen gekrümmten Abschnitten (25) umfassen, die einen axialen Durchgang für die Schraube (13) definieren, wobei ein Schaft der Regulierungsschraube (13) ein nicht mit Gewinde versehenes Teilstück (26), das, an der Spitze, frei in ein in den Schlitten (12) eingefrästes Ende (27) eingesetzt ist, und ein mit Gewinde versehenes Teilstück (28) mit einem Manövrierkopf (29) aufweist, das mit den mit Gewinde versehenen Abschnitten (25) gekoppelt ist.

2. Vorrichtung (10) nach Anspruch 1, **dadurch gekennzeichnet, dass** die Verankerungsmittel (30) aus einem vorstehenden Zahn, der zum Einsetzen in einen kanalförmigen Sitz (31) des Teilstücks (32) geeignet ist, und einem Anschlag (33) bestehen, der gegen einen freien Rand (34) des Sitzes (31) gepuffert ist.

3. Vorrichtung (10) nach Anspruch 1, **dadurch gekennzeichnet, dass** die Zwangssitze (22, 23) aus einem U-Bügel (22) mit einem Halteblock (23) des Schlittens (12) bestehen, wobei die Translationssitze (20, 21) aus zwei Teilstücken oder Auflage- und Gleitebenen bestehen, die voneinander beabstandet und koplanar zu der Platte (16) sind, wobei zwischen den Platten der U-Bügel (22) vorhanden ist, der von der Platte (16) nur so weit vorragt, dass der Durchtritt und das richtige Gleiten des Schlittens (12) zugelassen wird.

4. Vorrichtung (10) nach Anspruch 1, **dadurch gekennzeichnet, dass** der geformte Abschnitt (24) mit mit Gewinde versehenen gekrümmten Abschnitten (25) versehen ist, die entgegengesetzt und gegenseitig verschoben sind und einen axialen Durchgang für die Schraube (13) definieren.

5. Vorrichtung (10) nach Anspruch 1, **dadurch gekennzeichnet, dass** eine Gegenfeder (14) zwischen dem Schlitten (12) und der Tragplatte (11) wirkt.

6. Vorrichtung (10) nach Anspruch 1, **dadurch gekennzeichnet, dass** eine Gegenfeder (14) zwischen dem Abschnitt (14) und dem eingefrästen Ende (27) des Schlittens (12) wirkt.

7. Verkleidungspaneel (18), das eine Reihe von Vorrichtungen (10) nach einem oder mehreren der Ansprüche 1-6 umfasst.

## Revendications

1. Dispositif de réglage vertical (10) pour le montage mural (19) d'un panneau de revêtement (18) du type comprenant un mécanisme de réglage (12, 13) tenu par une plaque de support (11) destinée à être fixée sur ledit panneau de revêtement (18), et dans lequel ledit mécanisme de réglage (12, 13) comprend :
- un moyen d'ancrage (30) sur une section (32) fixée audit mur (19),
- un curseur (12) dont l'extrémité inférieure comporte ledit moyen d'ancrage (30) à ladite section (32),
- une vis de réglage (13) agissant à l'extrémité supérieure dudit curseur (12),
ladite plaque (11) comprenant deux brides latérales (16) pour fixer le dispositif (10) sur ledit panneau (18), entre lesdites brides (16) se trouvant des sièges de retenue (22, 23) et des sièges de translation (20, 21) dudit curseur (12) et des sièges de retenue et de translation (24, 25) de ladite vis (13),
**caractérisé en ce que** lesdits sièges de retenue et de translation (24, 25) de ladite vis (13) comprennent une partie façonnée (24) comportant des parties arquées filetées (25) qui définissent un passage axial pour ladite vis (13), une tige de ladite vis de réglage (13) ayant une section non filetée (26) qui, au bout, est insérée librement dans une extrémité percée par meulage (27) dudit curseur (12), et une section filetée (28) comportant une tête de manoeuvre (29) qui est accouplée auxdites parties filetées (25).

2. Dispositif (10) selon la revendication 1, **caractérisé en ce que** ledit moyen d'ancrage (30) consiste en une dent saillante adaptée pour être insérée à l'intérieur d'un siège en forme de canal (31) de la section (32) et une butée (33) qui est amortie contre un bord libre (34) dudit siège (31).

3. Dispositif (10) selon la revendication 1, **caractérisé en ce que** lesdits sièges de retenue (22, 23) consistent en un boulon en U (22) avec un parement de retenue (23) dudit curseur (12), lesdits sièges de translation (20, 21) consistent en deux sections ou plans de repos et glissement, espacés et coplanaires avec la plaque (16), entre lesdits plans se trouve ledit boulon en U (22) qui fait saillie depuis la plaque (16) sur une distance seulement suffisante pour permettre le passage et le glissement correct du curseur (12).

4. Dispositif (10) selon la revendication 1, **caractérisé en ce que** ladite partie façonnée (24) est pourvue de parties arquées filetées (25), opposées entre elles et décalées réciproquement, qui définissent un passage axial pour ladite vis (13).

5. Dispositif (10) selon la revendication 1, **caractérisé en ce qu'**un ressort de contraste (14) agit entre ledit curseur (12) et ladite plaque de support (11).

6. Dispositif (10) selon la revendication 1, **caractérisé en ce qu'**un ressort de contraste (14) agit entre ladite partie (24) et ladite extrémité percée par meulage (27) dudit curseur (12).

7. panneau de revêtement (18) comprenant une série de dispositifs (10) selon l'une ou plusieurs des revendications 1 à 6.
